# EUROPEAN PATENT APPLICATION

(11) **EP 4 362 137 A1**
(43) Date of publication of application: **01.05.2024**
(21) Application number: 22951356.9
(22) Date of filing: 25.08.2022
(51) Int. Cl.: H01M 4/583

(54) **CARBON MATERIAL AND PREPARATION METHOD THEREFOR AND USE THEREOF, NEGATIVE ELECTRODE SHEET, SECONDARY BATTERY AND ELECTRIC DEVICE**

(71) Applicant: Contemporary Amperex Technology Co., Limited, Ningde City, Fujian 352100 (CN)
(72) Inventor: MA, Yu, Ningde Fujian 352100 (CN); CHEN, Xiaoxia, Ningde Fujian 352100 (CN); ZHENG, Xiaoji, Ningde Fujian 352100 (CN)
(74) Representative: Gong, Jinping
(86) International application number: PCT/CN2022/114724
(87) International publication number: WO 2024/040501

(57) **Abstract**

The present application provides a carbon material, a preparation method therefor and the use thereof, a negative electrode plate, a secondary battery, and a power consuming device. The carbon material comprises a porous carbon substrate and an amorphous carbon layer provided on at least part of a surface of the porous carbon substrate. When the carbon material is used as a negative electrode active material, it can make full use of the abundant porous structures in the porous carbon substrate for lithium/sodium precipitation or lithium/sodium intercalation and avoid the side reactions due to the contact between the abundant active sites on the surface of the porous carbon substrate and an electrolyte solution, such that the initial coulombic efficiency and the actual capacity of a secondary battery can be improved.

## Description

### Technical Field

The present application relates to the field of batteries, and particularly to a carbon material, a preparation method therefor and the use thereof, a negative electrode plate, a secondary battery and a power consuming device.

### Background Art

Secondary batteries have been increasingly widely used due to the characteristics of being clean and renewable, and have the advantages such as a high energy density, a low self-discharge, and an excellent cycling performance.

Secondary batteries generate the electric energy primarily by means of the movement of active ions between a positive electrode and a negative electrode. During charging, the active ions are deintercalated from the positive electrode and intercalated into the negative electrode through an electrolyte solution, and the opposite is true during discharging. However, during the initial charging/discharging of the secondary battery, some of the active ions deintercalated from a positive electrode material will be consumed, thereby forming an SEI film on a surface of the negative electrode, and these active ions can not return to the positive electrode material during the subsequent discharge, such that the initial charge/discharge efficiency of the secondary battery is reduced, resulting in the reduction in the actual capacity of the secondary battery.

With the improvement in needs, the secondary charge/discharge efficiency of traditional secondary batteries is increasingly difficult to meet people's needs, and needs to be further improved.

### Summary of the Invention

In view of the above problems, the present application provides a carbon material, a preparation method therefor and the use thereof, a negative electrode plate, a secondary battery and a power consuming device, aiming to improve the initial coulombic efficiency of the secondary battery.

In order to achieve the above object, according to the first aspect of the present application, provided is a carbon material, comprising a porous carbon substrate and an amorphous carbon layer provided on at least part of a surface of the porous carbon substrate.

In the above carbon material, at least part of the surface of the porous carbon substrate is provided with the amorphous carbon layer. When being used as a negative electrode active material to prepare a secondary battery, during the charging/discharging of the secondary battery, on the one hand, the amorphous carbon layer can prevent an electrolyte solution from penetrating into the porous carbon substrate, such that a large number of SEI side reactions between the abundant active sites on the surface of the porous carbon substrate and the electrolyte solution are avoided; and on the other hand, the amorphous carbon layer can block the direct contact between alkali metals such as lithium or sodium adsorbed in the porous structure of the porous carbon substrate and the electrolyte solution, such that the consumption of active ions in the electrolyte solution is avoided. Thus, it can make full use of the abundant porous structures in the porous carbon substrate for lithium/sodium precipitation or lithium/sodium intercalation and avoid the side reactions due to the contact between the abundant active sites on the surface of the porous carbon substrate and the electrolyte solution, such that the reversible capacity of the secondary battery is improved and the initial coulombic efficiency thereof is improved.

In any embodiment of the present application, the amorphous carbon layer has a thickness of 15 nm - 250 nm;
optionally, the amorphous carbon layer has a thickness of 20 nm - 220 nm;
optionally, the amorphous carbon layer has a thickness of 20 nm - 200 nm; and
optionally, the amorphous carbon layer has a thickness of 50 nm - 130 nm.

By adjusting and controlling the thickness of the amorphous carbon layer, the coating effect of the amorphous carbon layer is further improved while ensuring that the excellent lithium/sodium or lithium/sodium intercalation ability of the abundant porous structures in the porous carbon substrate is maximized, such that the initial coulombic efficiency of the secondary battery is further improved. In any embodiment of the present application, the amorphous carbon layer is formed by means of the vapor deposition of an aryl compound having 6-40 carbon atoms.

A dense amorphous carbon layer can be formed by means of vapor deposition using an aryl compound having 6-40 carbon atoms as a carbon source.

In any embodiment of the present application, the porous structure of the porous carbon substrate comprises a microporous structure, a mesoporous structure and a macroporous structure.

The porous carbon substrate has a graded porous structure, in which the mesoporous/macroporous structures are used for lithium/sodium precipitation, and the microporous structure is used for lithium/sodium intercalation, which is conducive to fully releasing the capacity of the secondary battery.

In any embodiment of the present application, the porous carbon substrate has a specific surface area of ≥ 500 m²/g.

In any embodiment of the present application, the porous carbon substrate is activated carbon.

In a second aspect of the present application, provided is a method for preparing the carbon material of the first aspect, the method comprising the following step:
performing a vapor deposition treatment on the surface of the porous carbon substrate using a carbon source to form the amorphous carbon layer so as to obtain the carbon material.

In a third aspect of the present application, provided is the use of the carbon material of the first aspect as a negative electrode active material.

In a fourth aspect of the present application, provided is a negative electrode plate, including a current collector and a negative electrode active layer provided on a surface of the current collector, wherein the negative electrode active layer includes the carbon material of the first aspect as a component.

In any embodiment of the present application, the mass percentage of the carbon material in the negative electrode active layer is 90%-95%.

In a fifth aspect of the present application, provided is a secondary battery comprising the negative electrode plate of the fourth aspect of the present application.

In a sixth aspect of the present application, provided is a power consuming device, including the secondary battery of the fifth aspect of the present application.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
Fig. 1 is a schematic diagram of an embodiment of a secondary battery.
Fig. 2 is an exploded view of Fig. 1.
Fig. 3 is a schematic diagram of an embodiment of a battery pack.
Fig. 4 is an exploded view of Fig. 3.
Fig. 5 is a schematic diagram of an embodiment of a power consuming device with a secondary battery as a power source.
Fig. 6 is a comparison diagram of electron microscope images of an uncoated activated carbon and a carbon material prepared in example 1.
Fig. 7 is an electron microscope image of a carbon material prepared in example 1.

### List of reference numerals:

1. battery pack; 2. upper box body; 3. lower box body; 4. secondary battery; 41. housing; 42. electrode assembly; 43. cover plate; 5. Power consuming device.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

In view of the above background, during the charging/discharging of the traditional secondary batteries, it is inevitable that some of active ions deintercalated from a positive electrode material will be consumed, such that the initial charge/discharge efficiency of the secondary battery is reduced, the initial charge/discharge efficiency of the secondary battery is reduced, resulting in the reduction in the actual capacity of the secondary battery.

By means of long-term production and research, the skilled person of the present application has found: the direct factor affecting the initial charge/discharge efficiency of a secondary battery is the specific surface area of a graphite negative electrode, that is, when the specific surface area of the graphitized negative electrode is larger, the area for forming an SEI film will be larger, such that more active ions will be consumed, thus the initial efficiency of the secondary battery is reduced. Therefore, graphite with a layered structure is commonly used as a negative electrode active material, which has a small specific surface area, such that the area for forming an SEI film is small, thereby avoiding consuming too many active ions.

However, by means of using graphite as a negative electrode active material, the consumption of active ions can be avoided to a certain extent, but meanwhile, graphite with a small specific surface area and a layered structure has insufficient active sites, so that the deintercalation of active ions therein is limited, which in turn limits the capacity release of the secondary battery. Therefore, the traditional technologies focus on the modification of graphite, for example, in a technical solution, graphite and amorphous carbon are sintered to form composite carbon particles with a special interface peak so as to improve the smooth deintercalation of active ions therein.

However, the skilled person of the present application breaks through the shackles of the traditional technologies, does the opposite, finds another way, and creatively proposes: a porous carbon substrate with a porous structure and a large specific surface area is directly used and a "barrier layer" is formed on the surface thereof, such that it can make full use of the abundant porous structures in the porous carbon substrate for lithium/sodium precipitation or lithium/sodium intercalation and avoid the side reactions due to the contact between the abundant active sites on the surface of the porous carbon substrate and an electrolyte solution, thus the reversible capacity of the secondary battery is improved and the initial coulombic efficiency thereof is improved.

In an embodiment of the present application, provided is a carbon material, comprising a porous carbon substrate and an amorphous carbon layer provided on at least part of a surface of the porous carbon substrate.

In the above carbon material, at least part of the surface of the porous carbon substrate is coated with the amorphous carbon layer. When being used as a negative electrode active material to prepare a secondary battery, during the charging/discharging of the secondary battery, on the one hand, the amorphous carbon layer can prevent an electrolyte solution from penetrating into the porous carbon substrate, such that a large number of SEI side reactions between the abundant active sites on the surface of the porous carbon substrate and the electrolyte solution are avoided; and on the other hand, the amorphous carbon layer can block the direct contact between alkali metals such as lithium or sodium adsorbed in the porous structure of the porous carbon substrate and the electrolyte solution, such that the consumption of active ions in the electrolyte solution is avoided. Thus, it can make full use of the abundant porous structures in the porous carbon substrate for lithium/sodium precipitation or lithium/sodium intercalation and avoid the side reactions due to the contact between the abundant active sites on the surface of the porous carbon substrate and the electrolyte solution, such that the reversible capacity of the secondary battery is improved and the initial coulombic efficiency thereof is improved.

In any embodiment of the present application, based on the total surface area of the porous carbon substrate, the area percentage of the surface provided with the amorphous carbon layer is ≥ 50%; further, ≥ 60%; further, ≥ 70%; further, ≥ 80%; further, ≥ 90%; and further, 90%-100%.

In any embodiment of the present application, the porous carbon substrate is coated with the amorphous carbon layer.

In any embodiment of the present application, the amorphous carbon layer has a thickness of 15 nm - 250 nm.

In any embodiment of the present application, the amorphous carbon layer has a thickness of 20 nm - 220 nm.

In any embodiment of the present application, the above amorphous carbon layer has a thickness of 20 nm - 200 nm.

In any embodiment of the present application, the above amorphous carbon layer has a thickness of 50 nm - 130 nm.

By adjusting and controlling the thickness of the amorphous carbon layer, the coating effect of the amorphous carbon layer is further improved while ensuring that the excellent lithium/sodium or lithium/sodium intercalation ability of the abundant porous structures in the porous carbon substrate is maximized, such that the initial coulombic efficiency of the secondary battery is further improved. In the above "15 nm-250 nm", the value includes the minimum value and the maximum value of the range, and every value between the minimum value and the maximum value. Specific examples include, but are not limited to, point values in the embodiment and 15 nm, 20 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, 210 nm, 220 nm, 230 nm, 240 nm, and 250 nm.

It should be noted that: the thickness of the above amorphous carbon layer is measured by taking the contact interface between the amorphous carbon layer and the outer surface of the porous carbon substrate as the measurement reference line; further, it can be analyzed and measured by means of electron microscope.

In any embodiment of the present application, the above amorphous carbon layer is formed by means of the deposition of an aryl compound having 6-40 carbon atoms.

A dense amorphous carbon layer can be formed using an aryl compound having 6-40 carbon atoms as a carbon source.

Examples of the aryl compound having 6-40 carbon atoms include, but are not limited to: benzene, toluene, and xylene.

In any embodiment of the present application, the porous structure of the above porous carbon substrate comprises a microporous structure, a mesoporous structure and a macroporous structure.

The porous carbon substrate has a graded porous structure, in which the mesoporous/macroporous structures are used for lithium/sodium precipitation, and the microporous structure is used for lithium/sodium intercalation, which is conducive to fully releasing the capacity of the secondary battery.

The porous structure is called a microporous structure when a pore size is < 2 nm; is called a mesoporous structure when the pore size is between 2 nm and 50 nm; and is called a macroporous structure when the pore size is > 50 nm.

It should be noted that during the preparation, because the porous carbon substrate has a porous structure, an amorphous carbon layer may also be formed on the inner pore surface of the porous structure during the preparation, the amorphous carbon layer may or may not exist. When the amorphous carbon layer exists, there is no specific requirement in this application for the thickness of the amorphous carbon layer on the inner pore surface of the porous structure.

In any embodiment of the present application, the above porous carbon substrate has a specific surface area of ≥ 500 m²/g.

In any embodiment of the present application, the above porous carbon substrate is activated carbon. In any embodiment of the present application, the above porous carbon substrate has a volume particle size D(v)50 of ≤ 5 µm; further, 0.1 µm≤ D(v)50 ≤ 5 µm.

In any embodiment of the present application, the above porous carbon substrate has a volume particle size D(v)90 of ≤ 20 µm; further, 7 µm ≤D(v)90 ≤ 20 µm.

In any embodiment of the present application, the above porous carbon substrate has a volume particle size D(v)50 of µm and D(v)90 of 10 µm.

D(v)50 or D(v)90 refers to the particle size corresponding to 50% of the volume distribution in the particle size volume cumulative distribution curve, and can be obtained based on the volume cumulative distribution curve, specifically can be measured by means of a Malvern laser particle size analyzer.

In an embodiment of the present application, provided is a method for preparing the above carbon material, the method comprising the following step S10:
step S10, performing a vapor deposition treatment on the surface of the porous carbon substrate using a carbon source to form the amorphous carbon layer so as to obtain the carbon material.

In any embodiment of the present application, the above carbon source is an aryl compound having 6-40 carbon atoms.

A dense amorphous carbon layer can be formed using an aryl compound having 6-40 carbon atoms as a carbon source.

In any embodiment of the present application, the above carbon source comprises: at least one of benzene, toluene, and xylene.

In any embodiment of the present application, the temperature for the above vapor deposition treatment is controlled at 750°C-1000°C.

In the above "750°C-1000°C", the value includes the minimum value and the maximum value of the range, and every value between the minimum value and the maximum value. Specific examples include, but are not limited to, point values in the embodiment and 750°C, 800°C, 850°C, 900°C, 950°C, and 1000°C.

By controlling the temperature, it is ensured that a dense amorphous carbon layer is formed without damaging the structure and performance of the activated carbon per se.

In any embodiment of the present application, the above vapor deposition treatment is carried out by means of a chemical vapor deposition method.

In any embodiment of the present application, the carbon source has a flow rate of 0.9 mL/h-4 mL/h. In any embodiment of the present application, the carbon source has a flow rate of 0.95 mL/h -3.8 mL/h.

In the above "0.9 mL/h - 4 mL/h", the value includes the minimum value and the maximum value of the range, and every value between the minimum value and the maximum value. Specific examples include, but are not limited to, point values in the embodiment and 0.9 mL/h, 0.95 mL/h, 1 mL/h, 1.5 mL/h, 1.9 mL/h, 2 mL/h, 2.5 mL/h, 3 mL/h, 3.5 mL/h, 3.8 mL/h, and 4 mL/h.

In any embodiment of the present application, the deposition time is 0.3 h-4 h.

In the above "0.3 h - 8 h", the value includes the minimum value and the maximum value of the range, and every value between the minimum value and the maximum value. Specific examples include, but are not limited to, point values in the embodiment and 0.3 h, 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h, and 8 h.

By controlling the temperature, time, etc. for the vapor deposition, the thickness of the formed amorphous carbon layer can be adjusted and controlled.

In any embodiment of the present application, the above vapor deposition is performed in a protective gas atmosphere.

The protective gas includes at least one of nitrogen and an inert gas.

The inert gas may be selected from at least one of helium (He), neon (Ne), argon (Ar), and krypton (Kr).

In an embodiment of the present application, provided is the use of the above carbon material as a negative electrode active material.

When the above carbon material is used as a negative electrode active material, the reversible capacity of a secondary battery can be improved and the initial coulombic efficiency thereof can be improved. In an embodiment of the present application, further provided is a negative electrode plate, including a current collector and a negative electrode active layer provided on a surface of the current collector, wherein the negative electrode active layer includes the above carbon material as a component.

In any embodiment of the present application, the mass percentage of the carbon material in the negative electrode active layer is 90%-95%.

In any embodiment of the present application, the above negative electrode active layer further includes a negative electrode conductive agent and a negative electrode binder as components.

In any embodiment of the present application, the above negative electrode conductive agent can be a conductive material commonly used in the art, including but not limited to: at least one of graphite, carbon nanotubes, nanofibers, carbon black and graphene. Specifically, it can be selected from at least one of SP, KS-6, acetylene black, Ketjen black ECP with a branched chain structure, SFG-6, vapor grown carbon fiber VGCF, carbon nanotubes CNTs, and graphene and a composite conductive agent thereof.

Based on the total weight of the negative electrode active layer, the weight percentage of the negative electrode conductive agent in the negative electrode active layer is 0-20 wt%.

The above negative electrode binder can be a common binder in the art, and may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

Based on the total weight of the negative electrode active layer, the weight percentage of the negative electrode binder in the negative electrode active layer is 0-30 wt%.

In some embodiments, the negative electrode active layer further optionally comprises other auxiliary agents, for example a thickener, e.g. sodium carboxymethyl cellulose (CMC-Na), etc. Based on the total weight of the negative electrode active layer, the weight percentage of the other auxiliary agents in the negative electrode active layer is 0-15 wt%.

In some embodiments, the current collector in the negative electrode plate may be a metal foil or a composite current collector. For example, as a metal foil, a copper foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

The above negative electrode plate can be used as a negative electrode plate of various secondary batteries, including but not limited to: sodium-ion batteries and lithium-ion batteries.

In some embodiments, the negative electrode plate can be prepared as follows: dispersing the above-mentioned components for preparing the negative electrode plate, such as a carbon material, a conductive agent, a binder and any other components, in a solvent (e.g. deionized water) to form a negative electrode slurry; and coating a negative electrode current collector with the negative electrode slurry, followed by procedures such as drying and cold pressing, so as to obtain the negative electrode plate, wherein the negative electrode slurry has a solid content of 30 wt%-70 wt%, and the viscosity thereof at room temperature is adjusted to 2000 mPa·s - 10000 mPa·s. The resulting negative electrode slurry is coated onto a negative electrode current collector, followed by a drying procedure and cold pressing (e.g., double rollers), so as to obtain the negative electrode plate, and the negative electrode plate has a compacted density of 0.8 g/cm³-1.5 g/cm³.

In an embodiment of the present application, provided is a secondary battery, comprising the above negative electrode plate.

The secondary battery has a high initial coulombic efficiency, and a higher actual capacity released. In any embodiment of the present application, the above secondary battery further includes a positive electrode plate, an electrolyte solution, and a separator.

The positive electrode plate, the electrolyte solution and the separator are illustrated below, but are not limited to the following scopes.

### [Positive electrode plate]

The positive electrode plate comprises a current collector and a positive electrode active layer provided on a surface of the current collector, wherein the positive electrode active layer includes a positive electrode active material as a component.

As an example, the current collector in the positive electrode plate has two surfaces opposite in its own thickness direction, and the positive electrode active material layer is provided on either or both of the two opposite surfaces of the positive electrode current collector.

In some embodiments, the current collector in the positive electrode plate may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

The above positive electrode active material can be a positive electrode active material commonly used in the present application, such as a lithium ion positive electrode active material or a sodium ion positive electrode active material.

Further, as an example, the lithium ion active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (e.g. LiCoO₂), lithium nickel oxide (e.g. LiNiO₂), lithium manganese oxide (e.g. LiMnO₂, and LiMn₂O₄), lithium nickel cobalt oxide, lithium manganese cobalt oxide, lithium nickel manganese oxide, lithium nickel cobalt manganese oxide (e.g. LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (e.g. LiNi_{0.85}Co_{0.15}Al_{0.05}O₂), modified compounds thereof, etc. Examples of lithium-containing phosphates of an olivine structure may include, but are not limited to, at least one of lithium iron phosphate (e.g. LiFePO₄ (also abbreviated as LFP)), lithium manganese phosphate (e.g. LiMnPO₄), and lithium iron manganese phosphate.

In any embodiment of the present application, the lithium ion active material has a molecular formula of: LiFeₓNM₍₁₋ₓ₎PO₄, wherein x is any number of 0 to 1.

It can be understood that when x is 0, LiFeₓMn₍₁₋ₓ₎PO₄ is LiMnPO₄, i.e., lithium manganese phosphate, and when x is 1, LiFePO₄ is LiFePO₄, i.e., lithium iron phosphate.

As an example, the sodium ion active material may comprise at least one of the following materials: at least one of sodium transition metal oxides, polyanionic compounds and Prussian blue compounds. As an optional technical solution of the present application, in the sodium transition metal oxides, the transition metal at least includes at least one of Mn, Fe, Ni, Co, Cr, Cu, Ti, Zn, V, Zr and Ce. For example, the sodium transition metal oxide is NaₓMO₂, wherein M includes at least one or more of Ti, V, Mn, Co, Ni, Fe, Cr and Cu, and 0 < x ≤ 1.

As an optional technical solution of the present application, the polyanionic compounds can be a class of compounds having sodium ions, transition metal ions and tetrahedral (YO₄)ⁿ⁻ anion units. The transition metal at least includes at least one of Mn, Fe, Ni, Co, Cr, Cu, Ti, Zn, V, Zr and Ce; Y at least includes at least one of P, S and Si; and n denotes the valence of (YO₄)ⁿ⁻.

The polyanionic compounds can also be a class of compounds having sodium ions, transition metal ions, tetrahedral (YO₄)ⁿ⁻ anion units and halogen anions. The transition metal at least includes at least one of Mn, Fe, Ni, Co, Cr, Cu, Ti, Zn, V, Zr and Ce; Y at least includes at least one of P, S and Si; n denotes the valence of (YO₄)ⁿ⁻; and the halogen may be at least one of F, Cl and Br.

The polyanionic compounds can also be a class of compounds having sodium ions, tetrahedral (YO₄)ⁿ⁻ anion units, polyhedral units (ZO_{y})^{m+} and optional halogen anions. Y at least includes at least one of P, S and Si; n denotes the valence of (YO₄)ⁿ⁻; and Z represents a transition metal, at least including at least one of Mn, Fe, Ni, Co, Cr, Cu, Ti, Zn, V, Zr and Ce, m denotes the valence of (ZO_{y})^{m+}; and the halogen may be at least one of F, Cl and Br.

For example, the polyanionic compound is at least one of NaFePO₄, Na₃V₂(PO₄)₃ (sodium vanadium phosphate, abbreviated as NVP), Na₄Fe₃(PO₄)₂(P₂O₇), NaM'PO₄F (M' is one or more of V, Fe, Mn and Ni) and Na₃(VO_{y})₂(PO₄)₂F_{3-2y}(0 ≤ y ≤ 1).

The Prussian blue compounds can be a class of compounds having sodium ions, transition metal ions and cyanide ions (CN⁻). The transition metal at least includes at least one of Mn, Fe, Ni, Co, Cr, Cu, Ti, Zn, V, Zr and Ce. For example, the Prussian blue compound is NaₐMe_{b}Me'_{c}(CN)₆, wherein Me and Me' each independently at least include at least one of Ni, Cu, Fe, Mn, Co and Zn, 0 < a ≤ 2, 0 < b < 1, and 0 < c < 1.

Based on the total weight of the positive electrode active layer, the weight percentage of the positive electrode active material in the positive electrode active layer is 80 wt%-100 wt%.

In any embodiment of the present application, the positive electrode active layer further includes a positive electrode conductive agent and a positive electrode binder as components.

The above positive electrode conductive agent can be a conductive agent commonly used in the art, including but not limited to: at least one of graphite, carbon nanotubes, nanofibers, carbon black and graphene. Specifically, it can be selected from at least one of SP, KS-6, acetylene black, Ketjen black ECP with a branched chain structure, SFG-6, vapor grown carbon fiber VGCF, carbon nanotubes CNTs, and graphene and a composite conductive agent thereof.

Based on the total weight of the positive electrode active layer, the weight percentage of the positive electrode conductive agent in the positive electrode active layer is 0-20 wt%.

In any embodiment of the present application, the above positive electrode binder can be at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a hydrogenated nitrile rubber, a styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS) and a fluorine-containing acrylate resin.

Based on the total weight of the positive electrode active layer, the weight percentage of the positive electrode binder in the positive electrode active layer is 0-30 wt%.

In some embodiments, the positive electrode plate can be prepared as follows: dispersing the above-mentioned components for preparing the positive electrode plate in a solvent (such as N-methylpyrrolidone) to form a positive electrode slurry; and coating a current collector with the positive electrode slurry, followed by the procedures such as drying and cold pressing, so as to obtain the positive electrode plate. The positive electrode slurry has a solid content of 40 wt% - 80 wt%, and the viscosity thereof at room temperature is adjusted to 5000 mPa·s-25000 mPa·s; and the positive electrode slurry is coated onto a surface of the positive electrode current collector, dried and then cold pressed by means of a cold-rolling mill to form the positive electrode plate, wherein the unit surface density of the positive electrode powder coating is 150-350 mg/m², and the positive electrode plate has a compacted density of 3.0-3.6 g/cm³, optionally 3.3-3.5 g/cm³. The compacted density is calculated according to the following equation: the compacted density = the surface density of the coating/(the thickness of the electrode plate after pressing - the thickness of the current collector).

### [Electrolyte solution]

The electrolyte solution comprises an electrolyte salt and a solvent.

In some embodiments, the electrolyte salt can be selected from electrolyte salts commonly used in the art, including a lithium-ion electrolyte salt and a sodium-ion electrolyte salt.

The lithium-ion electrolyte salt is selected from: one or more of lithium hexafluorophosphate (LiPF6), lithium tetrafluoroborate (LiBF4), lithium perchlorate (LiClO4), lithium hexafluoroarsenate (LiAsF6), lithium bisfluorosulfonimide (LiFSI), lithium bis(trifluoromethanesulfonimide) (LiTFSI), lithium trifluoromethanesulfonate (LiTFS), lithium difluorooxalatoborate (LiDFOB), lithium bis(oxalato)borate (LiBOB), lithium difluorophosphate (LiPO2F2), lithium bisoxalatodifluorophosphate (LiDFOP), and lithium tetrafluorooxalatophosphate (LiTFOP).

The sodium ion electrolyte salt is selected from: one or more of sodium-difluoro(oxalato)borate, sodium hexafluorophosphate, sodium tetrafluoroborate, and sodium perchlorate.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte salt generally has a concentration of 0.5 mol/L - 15 mol/L.

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

The separator is arranged between the positive electrode plate and the negative electrode plate.

The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

The above secondary battery further includes a shell for packaging the positive electrode plate, the negative electrode plate, the separator and the electrolyte solution.

In some embodiments, the above shell may be a hard shell, such as a hard plastic shell, an aluminum shell, and a steel shell. The shell may also be a soft bag, such as a pouch-type soft bag. The material of the soft bag may be plastics, and the examples of plastics may comprise polypropylene, polybutylene terephthalate, polybutylene succinate, etc.

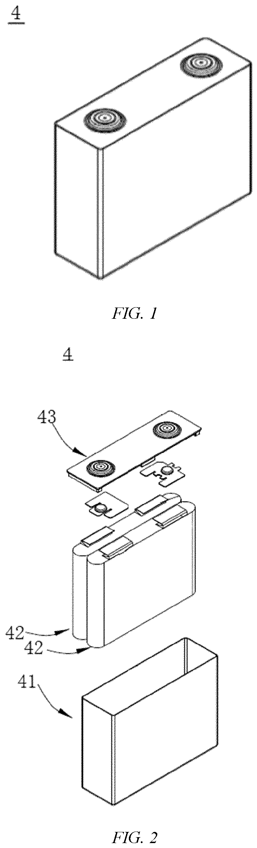

The secondary battery of the present application is a lithium ion battery, or a sodium ion battery. The shape of the secondary battery is not particularly limited in the present application and may be cylindrical, square or of any other shape. For example, Fig. 1 shows a secondary battery 4 having a square structure as an example.

In any embodiment of the present application, referring to Fig. 2, the shell may comprise a housing 41 and a cover plate 43. Herein, the housing 41 may comprise a bottom plate and side plates connected to the bottom plate, and the bottom plate and the side plates enclose to form an accommodating cavity. The housing 41 has an opening in communication with the accommodating cavity, and the cover plate 43 may cover the opening to close the accommodating cavity.

The positive electrode plate, the negative electrode plate, and the separator may be subjected to a winding process or a laminating process to form an electrode assembly 42. The electrode assembly 42 is packaged in the accommodating cavity. The electrolyte solution infiltrates the electrode assembly 42. The number of the electrode assemblies 42 contained in the battery 4 may be one or more, and may be adjusted according to requirements.

The present application further provides a power consuming device, including the above secondary battery.

Further, In the above power consuming device, the secondary battery may exist in the form of a battery cell, or may be further assembled into a battery pack.

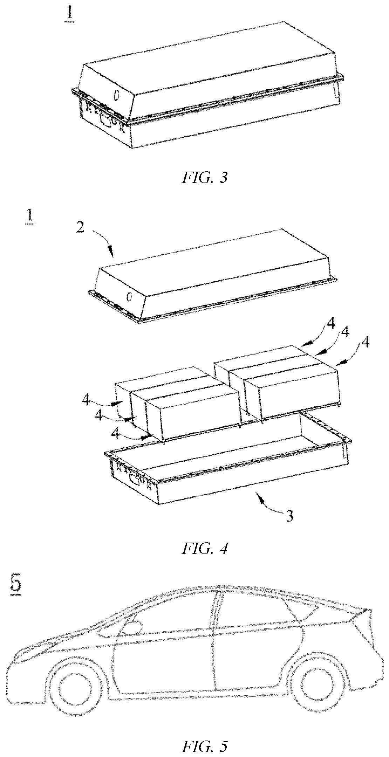

Fig. 3 and Fig. 4 show a battery pack 1 as an example. The battery pack 1 comprises a battery box and one or more secondary batteries 4 arranged in the battery box. The battery box comprises an upper box body 2 and a lower box body 3, wherein the upper box body 2 can cover the lower box body 3 to form a closed space for the secondary batteries 4.

The plurality of secondary batteries 4 may be arranged in the battery box in any manner.

A secondary battery or battery pack may be used for the power consuming device according to the usage requirements thereof.

The above secondary battery or the battery pack assembled thereby may be used as a power source or an energy storage unit of the power consuming device.

The above power consuming device may be, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

Fig. 5 shows a power consuming device 5 as an example. The power consuming device 5 is a pure electric vehicle, a hybrid electric vehicle, a plug-in hybrid electric vehicle, etc. In order to meet the requirements of the power consuming device 5 for a high power and a high energy density of a secondary battery, a battery pack may be used.

As another example, the power consuming device may be a mobile phone, a tablet computer, a laptop computer, etc. The device is generally required to be thin and light, and may have a battery used as a power source.

The present invention will be described below in conjunction with specific examples, but the present invention is not limited to the following examples; it should be understood that the appended claims have generalized the scope of the present invention, under the guidance of the inventive concept, those skilled in the art should realize that certain changes made to the various examples of the present invention will be covered by the spirit and scope of the claims of the present invention.

The following are specific examples.

### Specific examples

### Example 1

### (1) Preparation of positive electrode plate:

1. Preparation of lithium ion positive electrode plate: A lithium iron phosphate material, a conductive agent of carbon black, and a binder of PVDF were dissolved in a solvent of deionized water at a weight ratio of 97.4 : 1.74 : 0.86, and mixed until uniform to prepare a positive electrode slurry; and the positive electrode slurry was uniformly coated onto a negative electrode current collector of copper foil one time, followed by drying, cold pressing, and slitting to obtain the lithium ion positive electrode plate.
2. Preparation of sodium ion positive electrode plate: A Prussian white material, a conductive agent of carbon black, and polyvinylidene fluoride (PVDF) were dissolved in a solvent of deionized water at a weight ratio of 95 : 5 : 5, and mixed until uniform to prepare a positive electrode slurry; and the positive electrode slurry was uniformly coated onto a positive electrode current collector of copper foil one time, followed by drying, cold pressing, and slitting to obtain the sodium ion positive electrode plate.

### (2) Preparation of negative electrode plate:

1. Preparation of carbon material: 10 g of activated carbon particles (volume particle size D(v)50 of 5 µm, and D(v)90 of 10 µm) were flatly laid on the bottom of a crucible to form an activated carbon base layer with a thickness of 2 mm, and then the crucible was placed in a tube furnace, heated to 800°C at 5°C/min, and held at the temperature for 4 h; then N₂ is introduced at a flow rate of 200 mL/min and used as a protective atmosphere, wherein when the temperature was kept at 800°C, a xylene gas was introduced at a flow rate of 1.9 mL/h and used as a carbon source for chemical vapor deposition to form an amorphous carbon layer so as to obtain a carbon material.

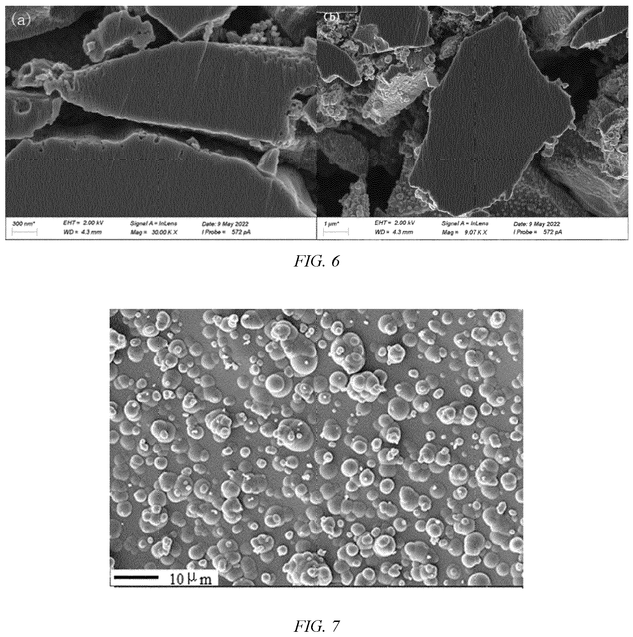

The uncoated activated carbon and the prepared carbon material were respectively placed under a ZEISS sigma 300 scanning electron microscope, and tested according to the standard JY/T010-1996, and the morphologies of the samples were observed. The electron microscope images of an uncoated activated carbon and the prepared carbon material were shown in Figs. 6 (a) and (b), respectively. The electron microscope image of the prepared carbon material was shown in Fig. 7, and it can be clearly observed that: the surface of the prepared carbon material was coated with an amorphous carbon layer. By controlling the time for introducing a xylene gas, the thickness of the formed amorphous carbon layer was controlled. The thickness of the amorphous carbon layer was measured as follows:
a morphology test was performed on the prepared carbon material by means of a nano-thin film scanning probe microscope ZEISS sigma 300 with reference to standard JY/T010-1996, 10 different positions in the sample to be tested were randomly selected for calibrating and testing the thickness of the amorphous carbon layer (taking the contact interface between the shaped carbon layer and the outer surface of the porous carbon substrate as the measurement reference line), and the average value was taken as the thickness of the amorphous carbon layer. The results were shown in Table 1.

The above volume-average particle size D(v)50 or D90(v) was tested as follows:
a laser particle size analyzer of Model Malvern 2000 (MasterSizer 2000) was used, with reference to the standard process: GB/T19077-2016/ISO 13320:2009, and the specific test process includes: taking an appropriate amount of the sample to be tested (the sample having a concentration that can ensure a shading degree of 8%-12%), adding 20 ml of deionized water and applying an ultrasonic treatment for 5 min (53 KHz/120 W) at the same time to ensure that the sample was completely dispersed, and then performing tests on the sample according to the GB/T19077-2016/ISO 13320:2009 standard.

2. The prepared carbon material, a conductive agent of carbon black, a binder of SD-3, and a thickener of sodium hydroxymethyl cellulose (CMC) were dissolved in a solvent of deionized water at a weight ratio of 95 : 1.74 : 2.3 : 0.96, and mixed until uniform to prepare a negative electrode slurry; and the negative electrode slurry was uniformly coated onto a negative electrode current collector of copper foil one time, followed by drying, cold pressing, and slitting to obtain the negative electrode plate.

### (3) Preparation of separator: A polypropylene film was used as a separator.

### (4) Preparation of electrolyte solution:

1. In a glove box under an argon atmosphere (H₂O < 0.1 ppm, and O₂ < 0.1 ppm), organic solvents of ethylene carbonate (EC)/ methyl ethyl carbonate (EMC) were mixed until uniform at a volume ratio of 3 : 7, a LiPF₆ lithium salt was added, dissolved in the organic solvents, and stirred until uniform to obtain a lithium ion battery electrolyte solution with a LiPF₆ lithium salt concentration of 12.5 wt%.
2. In a glove box under an argon atmosphere (H₂O < 0.1 ppm, and O₂ < 0.1 ppm), organic solvents of ethylene carbonate (EC)/ dimethyl carbonate (DMC) were mixed until uniform at a volume ratio of 1 : 1, a NaClO4 sodium salt was added, dissolved in the organic solvents, and stirred until uniform to obtain a sodium ion battery electrolyte solution with a NaClO4 sodium salt concentration of 10.4 wt%.

(5) Sequential slitting, shaping, assembling, and inserting into the shell of the lithium ion positive electrode plate and negative electrode plate, injection of the lithium-ion battery electrolyte solution, and the procedures of forming and aging processes so as to prepare a lithium-ion battery.

The sodium ion positive electrode plate and negative electrode plate were sequentially slitted, shaped, assembled, and inserted into a shell, a sodium ion battery electrolyte solution was injected, and forming and aging processes were performed so as to prepare a sodium ion battery.

### (6) Capacity test of lithium ion battery and sodium ion battery:

### 1. Capacity utilization test of battery

The capacity utilization test of a battery was as follows: at 25°C, the button half-cell corresponding to example 1 was discharged at a constant current of 0.05 C to 5 mV, then discharged at a constant voltage of 50 µA to 5 mV, allowed for standing for 1 h, and then discharged at 10 µA to 5 mV, the obtained capacity being recorded as the discharge capacity C0, and then allowed for standing for another 1 h, and then charged at a constant current of 0.05 C to 2 V, the obtained capacity being charging capacity C1, and the initial coulombic efficiency P0 = C1/C0 * 100%, wherein the platform capacity was the capacity at 0.2 V during charging.

The specific test results were shown in Table 1.

### Examples 2-15

Examples 2-15 were substantially the same as example 1, except that: during the preparation of the carbon material in step (2), the deposition temperature or deposition time or the flow rate of xylene gas or the thickness of the activated carbon base layer was adjusted to change the thickness of the amorphous carbon layer in the prepared carbon material, see Table 1 for specific parameters.

The remaining steps were the same as in example 1, see Table 1 for specific parameters and test results.

### Comparative example 1

Comparative example 1 was substantially the same as example 1, except that: in comparative example 1, the activated carbon was directly used as a negative electrode active material without being coated to prepare a negative electrode plate.

The remaining steps were the same as in example 1, see Table 1 for specific parameters and test results.

See Table 1 for relevant parameters and test results of each example and comparative example.

**Table 1**

| | Carbon substrate | Parameters of amorphous carbon layer | | | | | Sodium-ion battery | | Lithium-ion Battery | |
|---|---|---|---|---|---|---|---|---|---|---|
| | | Deposi tion temper ature (°C) | Dep osition time /h | Flow rate of carbon source (mL/h) | Flatly laid thickness of activated carbon (mm) | Thicknes s of amorpho us carbon layer (nm) | Platfo rm capac ity (mAh /g) | Initial efficiency (%) | Platfo rm capac ity (mAh /g) | Initial efficiency (%) |
| Exam ple 1 | Activated carbon | 800 | 4 | 1.9 | 2 | 100 | 280 | 83 | 66 | 66 |
| Exam ple 2 | Activated carbon | 800 | 0.5 | 1.9 | 2 | 20 | 100 | 55 | 135 | 75 |
| Exam ple 3 | Activated carbon | 800 | 1 | 1.9 | 2 | 50 | 350 | 86 | 150 | 80 |
| Exam ple 4 | Activated carbon | 800 | 2 | 1.9 | 2 | 80 | 320 | 84 | 80 | 67 |
| Exam ple 5 | Activated carbon | 800 | 8 | 1.9 | 2 | 200 | 130 | 80 | 34 | 45 |
| Exam ple 6 | Activated carbon | 750 | 4 | 1.9 | 2 | 60 | 356 | 80 | 100 | 50 |
| Exam ple 7 | Activated carbon | 850 | 4 | 1.9 | 2 | 120 | 235 | 82 | 80 | 73 |
| Exam ple 8 | Activated carbon | 900 | 4 | 1.9 | 2 | 100 | 283 | 84 | 75 | 80 |
| Exam ple 9 | Activated carbon | 1000 | 4 | 1.9 | 2 | 70 | 323 | 86 | 72 | 82 |
| Exam ple 10 | activated carbon | 800 | 4 | 0.95 | 2 | 50 | 366 | 85 | 143 | 80 |
| Exam ple 11 | activated carbon | 800 | 4 | 3.8 | 2 | 220 | 110 | 75 | 36 | 62 |
| Exam ple 12 | Activated carbon | 800 | 4 | 1.9 | 1 | 130 | 270 | 80 | 70 | 72 |
| Exam ple 13 | Activated carbon | 800 | 4 | 1.9 | 4 | 78 | 300 | 75 | 75 | 60 |
| Exam ple 14 | Activated carbon | 800 | 0.3 | 1.9 | 2 | 15 | 65 | 43 | 87 | 62 |
| Exam ple 15 | Activated carbon | 800 | 6 | 3.8 | 2 | 250 | 95 | 54 | 30 | 40 |
| Comp arative exam ple 1 | Activated carbon | 800 | 4 | / | / | 0 | 8 | 4 | 26 | 30 |

In which, "/" represents that the structure does not exist.

By analyzing the data in table 1, it can be seen that: When the carbon material of the present application is used as a negative electrode active material in a secondary battery, the reversible capacity of the secondary battery can be improved and the initial coulombic efficiency thereof is improved.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A carbon material, **characterized in that** the carbon material comprises a porous carbon substrate and an amorphous carbon layer provided on at least part of a surface of the porous carbon substrate.

2. The carbon material of claim 1, **characterized in that** the amorphous carbon layer has a thickness of 15 nm - 250 nm;
optionally, the amorphous carbon layer has a thickness of 20 nm - 220 nm;
optionally, the amorphous carbon layer has a thickness of 20 nm - 200 nm; and
optionally, the amorphous carbon layer has a thickness of 50 nm - 130 nm.

3. The carbon material of either of claims 1-2, **characterized in that** the amorphous carbon layer is formed by means of the vapor deposition of an aryl compound having 6-40 carbon atoms.

4. The carbon material of any one of claims 1-3, **characterized in that** the porous structure of the porous carbon substrate comprises a microporous structure, a mesoporous structure and a macroporous structure.

5. The carbon material of any one of claims 1-4, **characterized in that** the porous carbon substrate has a specific surface area of ≥ 500 m²/g.

6. The carbon material of any one of claims 1-5, **characterized in that** the porous carbon substrate is activated carbon.

7. A method for preparing a carbon material of any one of claims 1-6, **characterized in that** the method comprises the following step:
performing a vapor deposition treatment on the surface of the porous carbon substrate using a carbon source to form the amorphous carbon layer so as to obtain the carbon material.

8. Use of a carbon material of any one of claims 1 - 6 as a negative electrode active material.

9. A negative electrode plate, **characterized in that** the negative electrode plate comprises a current collector and a negative electrode active layer provided on a surface of the current collector, wherein the negative electrode active layer comprises a carbon material of any one of claims 1- 6 as a component.

10. The negative electrode plate of claim 9, **characterized in that** the mass percentage of the carbon material in the negative electrode active layer is 90%-95%.

11. A secondary battery, **characterized in that** the secondary battery comprises a negative electrode plate of either of claims 9-10.

12. A power consuming device, **characterized in that** the power consuming device comprises a secondary battery of claim 11.
